Europäisches Patentamt

(19) European Patent Office

Office européen des brevets

(11) Numéro de publication: **0 016 694**
**B1**

(12) **FASCICULE DE BREVET EUROPEEN**

(45) Date de publication du fascicule du brevet: **15.02.84**

(51) Int. Cl.³: **H 04 N 5/84**

(21) Numéro de dépôt: **80400338.2**

(22) Date de dépôt: **14.03.80**

(54) Procédé pour le stockage optique d'images numériques et pour la restitution analogique des images ainsi stockées.

(30) Priorité: **20.03.79 FR 7907014**

(43) Date de publication de la demande:
**01.10.80 Bulletin 80/20**

(45) Mention de la délivrance du brevet:
**15.02.84 Bulletin 84/7**

(84) Etats contractants désignés:
**DE GB NL**

(56) Documents cités:
FR - A - 2 327 693
GB - A - 2 016 853
US - A - 3 466 389
US - A - 3 806 643

**1973 IEEE INTERCON TECHNICAL PAPERS**
**Presented at the Institute of Electrical and**
**Electronics Engineers International Convention**
**and Exposition, 26-30 mars 1973, vol. 5,**
**Session 16 New York US R.W. CALFEE et al.:**
**"Image storage and display using magnetic disc**
**technology", pages 16/2, 1-8**

(73) Titulaire: **THOMSON-CSF**
**173, Boulevard Haussmann**
**F-75379 Paris Cedex 08 (FR)**

(72) Inventeur: **Klausz, Rémy**
**"THOMSON-CSF" SCPI - 173, bld Haussmann**
**F-75360 Paris Cedex 08 (FR)**

(74) Mandataire: **Thrierr, Françoise et al,**
**THOMSON-CSF SCPI 173, Bld Haussmann**
**F-75379 Paris Cedex 08 (FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

## Procédé pour le stockage optique d'images numériques et pour la restitution analogique des images ainsi stockées

L'invention concerne un procédé de stockage optique d'images numériques. Elle concerne également un procédé de restitution analogique des images ainsi stockées.

Dans un nombre de plus en plus grand de techniques les résultats apparaissent sous forme d'images numériques, ces résultats provenant d'un calcul, ou traduisant les variations de grandeurs mesurées à l'aide de capteurs numériques. On peut citer parmi ces techniques la transmission spatiale d'images, la télédétection ou le diagnostic médical.

De plus, il est souvent avantageux lors du traitement ou de la transmission de l'information, d'introduire un stade intermédiaire numérique.

Dans tous les cas, l'utilisation du fichier de nombres constituant l'image numérique passe nécessairement par le stockage de ce fichier, soit à titre temporaire le temps de l'utiliser, soit à titre permanent pour constituer des archives.

Les moyens généralement utilisés pour ce stockage sont les mêmes que pour celui de tous les autres fichiers dans le domaine de l'informatique, c'est-à-dire le stockage magnétique sur support rigide (disques, tambours) ou souple (bande magnétique). Or l'information ainsi stockée ne peut être exploitée qu'au moyen de dispositifs associés à des lecteurs complexes et coûteux. De plus, dans le cas du support de plus faible prix, la bande magnétique, le caractère séquentiel de l'enregistrement rend lente et fastidieuse la recherche d'un fichier particulier parmi les autres. Enfin, la quantité d'information de plus en plus élevée nécessite des volumes de stockage de plus en plus importants.

On connaît actuellement un autre procédé d'enregistrement: l'enregistrement optique. Il permet de stocker séquentiellement un fichier sous forme de points alternativement opaques (ou refléchissants) et transparents rangés en cercle ou en spirale sur un dique et pouvant être lus à l'aide d'un dispositif opto-électronique. Ce procédé, dont les avantages sont surtout le faible coût du support et la possibilité de transferts très rapides compatibles avec les cadences de télévision standard, présente les inconvénients de tous les systèmes numériques c'est-à-dire qu'ils imposent une exploitation indirecte par conversion numérique-analogique et la visualisation sur téléviseur.

On connaît par ailleurs un procédé permettant d'enregistrer sous un faible volume une grande quantité d'informations: le microfilm. Ce procédé offre en particulier la possibilité d'enregistrer directement sur des microfilms des informations d'origine alphabétique ou numérique au moyen de systèmes connus sous le nom d'imprimantes cathodiques. Dans ces systèmes, un dispositif optique impressionne une émulsion photographique à haute résolution suivant des formes prédéterminées reproduisant les caractères alphanumériques. L'observation de ces documents se fait simplement au moyen de dispositifs à grandissement optique.

Le brevet américain 3 466 389 enseigne qu'il est possible de constituer une image numérique conservant globalement une apparence analogique en regroupant aux endroits correspondants de l'image toutes les informations numériques les concernant. Cependant, ce système n'est utile que pour permettre une recherche visuelle de l'image numérisée et la pseudo-image visible directement sur la pellicule photographique est en fait considérablement dégradée si elle n'est pas lue par un système d'exploitation numérique.

L'invention permet à la fois une exploitation numérique et une exploitation analogique (par voie optique) de très bonne qualité.

Dans cet esprit, l'invention concerne donc un procédé de stockage optique d'une image numérique bi-dimensionnelle constituée de nombres formés chacun de plusieurs chiffres sur un support d'enregistrement, chaque chiffre étant traduit par une modification sur un élément de surface due support d'une caractéristique optique dudit support, cette caractéristique pouvant prendre au moins autant de valeurs qu'il existe de chiffres différents dans le système de numération utilisé pour l'image, consistant à décomposer l'image numérique en au moins autant de sous images qu'il est nécessaire d'utiliser de chiffres pour représenter la plus haute valeur possible pour un nombre de l'image numérique, chaque sous image étant conventionnellement associée au rang du chiffre, caractérisé en ce qu'il consiste à agencer séparément les unes à côté des autres lesdites sous images sur ledit support, chaque sous-image étant constituée d'éléments de surface jointifs représentatifs des chiffres d'un rang donné de l'image, lesdits éléments de surface occupant respectivement dans chaque sous image des position semblables à celles qu'occupent les nombres correspondants qui contiennent ces chiffres dans l'image numérique.

L'invention concerne également un procédé de restitution analogique d'une image numérique bi-dimensionnelle ainsi stockée, consistant à éclairer au moins un certain nombre de sous-images, à effectuer sur les faisceaux lumineux traversant lesdites sous-images une pondération fonction du rang associé à chacune de celles-ci et à faire la somme des faisceaux lumineux pondérés ainsi obtenus de façon à obtenir une superposition optique des différentes sous-images.

L'invention sera mieux comprise à l'aide des explications qui vont suivre et des figures jointes parmi lesquelles:

— les figures 1 (a), (b), (c) et (d), sont des schémas explicatifs du procédé de stockage d'une image numérique selon l'invention;

— la figure 2 est une représentation schématique d'un moyen permettant la mise en oeuvre du procédé d'exploitation numérique de l'image selon l'invention;

— la figure 3 est une représentation schématique d'un moyen permettant la mise en oeuvre du procédé de restitution analogique selon l'invention.

L'invention concerne essentiellement un nouveau procédé de stockage optique d'une image numérique.

Une image observable étant constituée par les variations visuellement perceptibles d'une grandeur définie en tout point d'une surface, il est possible de mesurer en un nombre fini de points, de préférence répartis réguilièrement sur la surface, la valeur de cette grandeur, c'est l'opération d'échantillonnage, et d'exprimer chacune de ces mesures par un nombre. L'ensemble de ces nombres, associés aux positions des points auxquels ils se rapportent, constitue l'image numérique qui contient une information utilisable avec le même profit que l'image observable qu'elle représente.

Inversement, la connaissance des valeurs d'une grandeur mesurée ou calculée en différents points d'une surface permet de la représenter sous la forme d'une image observable, ce qui met l'information sous une forme facilement accessible à l'utilisateur.

La figure la représente, à titre d'exemple, une partie d'une image numérique initiale I qui doit être stockée. Elle est formée de nombres comportant chacun plusieurs chiffres, (trois dans l'exemple choisi), chacun des nombres occupant dans cette image une position déterminée.

On a choisi pour cet exemple un système de numération binaire et un réseau d'échantillonnage à mailles carrées.

Le rang d'un chiffre est défini par sa position à l'intérieur du nombre. On peut décider que le chiffre de rang le plus bas est celui situé le plus à droite dans un nombre, ce rang augmentant progressivement en allant vers la gauche mais ceci est purement conventionnel.

Selon l'invention tous les chiffres d'un rang donné sont enregistrés sur un même support, constitué par exemple par un film, sous forme déléments de surface carrés et jointifs rendus opaques à la lumière lorsque le chiffre correspondant est 1, et seulement dans ce cas, pour constituer une sous-image. Un élément de surface associé à un chiffre occupe à l'intérieur de la sous-image une position semblable à celle qu'occupe le nombre contenant ce chiffre dans l'image numérique. L'enregistrement des différents chiffres constituant les nombres conduit à l'obtention d'autant de sous-images que les nombres comportent de chiffres.

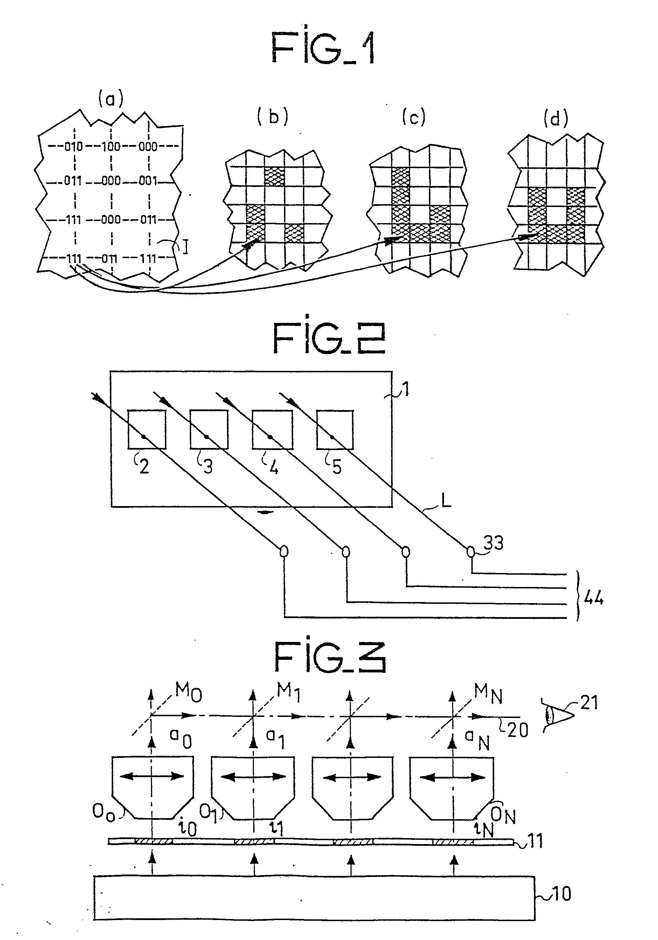

Les figures 1b, 1c, 1d représentent les parties des trois sous-images obtenues en enregistrant les nombres de la portion d'image numérique de la figure 1a; la figure 1b correspond aux chiffres de rang 2 (le plus à gauche dans chaque nombre), la figure 1c aux chiffres de rang 1 et la figure 1d aux chiffres de rang 0.

Les différentes sous-images sont de préférence enregistrées sur un même support constitué par une microfiche ou un film en bande; ceci permet entre autres de caractériser le rang des chiffres d'une sous-image simplement par la position de cette sous-image sur le support et facilite l'exploitation de l'enregistrement.

Dans l'exemple décrit l'enregistrement se fait par la technique dite du "tout ou rien" en associant au chiffre 1 un élément de surface du support rendu opaque à la lumière. Il est clair que l'on peut choisir la convention inverse et associer un élément de surface noirci au chiffre 0. On peut également choisir un autre mode de représentation, par exemple associer aux chiffres 0 et 1 des éléments de surface dont les facteurs de transmission, différents de 1 et 0, ont des valeurs intermédiaires suffisamment éloignées l'une de l'autre pour être facilement discernables.

D'autre part, le procédé selon l'invention n'est pas limité au cas d'une numération binaire. Toutefois, lorsque l'on utilise une numération de base supérieure à 2 il est nécessaire de prévoir un support ou un mode d'enregistrement permettant d'obtenir un nombre correspondant de valeurs facilement séparables.

Au lieu de la transmission on peut, pour l'enregistrement, faire varier d'autres caractéristiques physiques du support telles que la réflectivité, l'indice de réfraction, la couleur.

De plus, le réseau d'échantillonnage n'est pas forcément carré. Il peut être quelconque. De même, et indépendamment, les éléments de surface centrés sur les noeuds du réseau d'échantillonnage peuvent être de forme quelconque à condition de réaliser une "mosaïque" sensiblement jointive.

Enfin, il peut être intéressant de prévoir un nombre de sous-images supérieur à celui nécessaire pour représenter le nombre le plus grand de l'image numérique. On réserve alors ces sous-images supplémentaires à la représentation d'informations telles que signe, code de détection ou de correction d'erreurs.

L'enregistrement des différentes sous-images se fait par des moyens connus qui dépendent de la nature du support et de la caractéristique physique que l'on fait varier. Ces moyens ne font pas partie de l'invention. Nous ne les décrirons donc pas. Il peut s'agir entre autres de moyens permettant l'enregistrement photographique sur une émulsion à contraste élevé ou la destruction de couches minces opaques par un laser.

Le procédé que l'on vient de décrire permet le stockage d'une grande quantité d'informations sous un faible volume et, comme la grandeur caractéristique du support permettant de représenter l'image numérique peut ne prendre qu'un nombre limité de valeurs, ce procédé est peu coûteux. Il permet d'utiliser par exemple des microfiches au format standard et de regrouper sur un même support les sous-images de plusieurs images numériques. A titre d'exemple on peut regrouper sur une même microfiche de format standard dix à vingt images de chacune 10 à 15 sous-images binaires.

Ce procédé permet en outre soit de restituer de manière analogique, soit d'exploiter numériquement l'image enregistrée.

L'invention concerne également un procédé de restitution analogique et un procédé d'exploitation numérique de l'image stockée selon le procédé que l'on vient de décrire.

Les moyens permettant de mettre en oeuvre ces procédés sont à la portée de l'homme de l'art. On se contentera de décrire rapidement un dispositif possible pour chaque procédé, uniquement dans le but de mieux faire comprendre l'invention.

Conformément à l'invention on obtient une représentation visuelle de l'image numérique par des moyens purement optiques, sans intermédiaire électronique ou informatique, en combinant les valeurs d'une grandeur optique, par exemple une intensité lumineuse, obtenues en modulant cette grandeur par les éléments de surface correspondants d'un certain nombre au moins des sous-images enregistrées, la contribution de chaque sous-image étant liée au rang des chiffres qu'elle représente dans l'image numérique.

Si l'on prend l'exemple de la numération binaire, on sait que la valeur g de la grandeur G représentée par le nombre $b_{N-1} \ldots b_1 b_0$ est:

$$g = 2^{(N-1)} \times b_{N-1} + \ldots + 2^1 \times b_1 + 2^0 \times B_0$$

Il suffit donc, pour obtenir une représentation visuelle de l'image de superposer optiquement (cest-â-dire d'effectuer une addition sur les intensités en chaque point) les diverses sous-images, chacune ayant une intensité variant comme la puissance binaire de son rang.

La figure 3 représente schématiquement un moyen permettant d'effectuer cette superposition. Un dispositif 10 assure l'éclairement uniforme de toutes les sous-images $i_0, i_1, \ldots, i_N$ enregistrées sur un même support, par exemple une microfiche. Les faisceaux lumineux $a_0, a_1, \ldots a_n$, modulés par les différentes sous-images passent dans des objectifs $O_0, O_1 \ldots O_n$ dont les foyers objet se trouvent dans le plan des sous-images, un objectif étant prévu pour chacune des sous-images, et sont repris par des miroirs semi-transparents $M_0, M_1, \ldots M_n$ dont le coefficient de réflexion (ou de transmission) est égal à 0,5. Les miroirs assurent ainsi une pondération des intensités lumineuses transmises par les sous-images par des coefficients en progression géométrique. L'image transmise par le faisceau résultant 20 dont l'intensité est la somme pondérée des intensités lumineuses transmises par les sous-images peut être observée par l'utilisateur 21 directement ou par l'intermédiaire d'un enregistrement photographique, projetée sur un écran ou reprise par une caméra de télévision. Dans ce dernier cas, l'image peut être visualisée directement ou, après avoir subi différents traitements, sur un moniteur. On peut effectuer également des traitements limités de l'image, en particulier en ce qui concerne le contraste, lors de sa reconstitution; il suffit pour cela d'éclairer les sous-images par des faisceaux lumineux d'intensités différentes convenablement choisies, ou d'utiliser des dispositifs réflecteurs $M_0, M_1, \ldots, M_n$ de coefficients de réflexion différents.

La figure 2 représente schématiquement un moyen permettant de mettre en oeuvre le procédé d'exploitation numérique de l'image enregistrée. Les sous-images binaires 2, 3, 4, 5 obtenues grâce au procédé de stockage selon l'invention et enregistrées sur un même support 1 sont explorées par balayage, par des faisceaux lumineux L. Les intensités lumineuses des faisceaux transmis (ou réfléchis) sont mesurées par des détecteurs 33, par exemple des cellules photoélectriques. Les signaux 44, émis par ces détecteurs peuvent être emmagasinés dans une mémoire non représentée. Leur exploitation peut ensuite se faire de manière conventionnelle. Ces signaux peuvent également être utilisés pour une visualisation directe (c'est-à-dire sans mémorisation intermédiaire de l'image numérique globale) sur un écran de télévision. L'exploration des différentes sous-images se fait alors à la cadence vidéo. Les traitements classiques de l'image peuvent dans ce cas être effectués au fur et à mesure que les signaux apparaissent à l'entrée ou à la sortie d'un convertisseur numérique analogique placé à la suite des détecteurs, ou en prélevant les signaux correspondant à une ligne de l'image dans une mémoire tampon.

Dans le cas où l'on envisage la possibilité d'une visualisation directe de l'image sur un écran de télévision, il est intéressant d'utiliser non pas un détecteur mais une rangée de détecteurs par sous-image, afin de permettre une exploration ligne par ligne des sous-images.

Dans d'autres cas, par exemple lorsque l'image numérique est tout d'abord stockée dans une mémoire, il n'est pas nécessaire de prévoir un faisceau de lecture et un détecteur par sous-image. On peut n'utiliser qu'un seul faisceau et un seul détecteur et explorer les sous-images de façon totalement séquentielle.

Comme pour le procédé de restitution analogique, on n'est pas tenu d'exploiter toutes les sous-images enregistrées ni toute l'information contenue dans une sous-image.

L'invention peut être appliquée dans tous les domaines techniques où il est nécessaire ou avantageux de stocker des images numériques et notamment dans celui du diagnostic médical.

On rencontre dans ce domaine un nombre sans cesse croissant d'appareils qui fournissent des images du corps ou de la partie du corps examiné, sous forme numérique. C'est le cas des tomodensitomètres qui permettent d'obtenir une représentation des structures anatomiques par la mesure de la transmission à travers elles de radiations ionisantes et dans lesquels les valeurs mesurées sont traitées et transformées en images numériques représentant la répartition des coefficients d'absorption dans un plan. C'est également le cas des appareils utilisés en médecine nucléaire qui fournissent sous forme numérique une image de la répartition d'une substance radioactive introduite dans le corps et d'appareils récents de diagnostic par ultrasons qui donnent une image des structures qui réfléchissent les ondes ultrasonores.

Les images numériques fournies par ces appareils sont ensuite visualisées et/ou traitées. Il est également nécessaire de les stocker, temporairement ou à titre définitif. La quantité d'information contenue dans ces images est très importante. Par exemple, dans le cas de la tomodensitométrie, chaque image numérique est généralement formée de 256 × 256 nombres comportant chacun de 8 à 12 chiffres binaires et on peut aller jusqu'à 1 024 × 1 024 nombres pouvant atteindre 16 chiffres. Le procédé de stockage selon l'invention est donc particulièrement avantageux dans ce cas. Il permet d'obtenir une image exploitable à peu de frais. Il permet en plus de reconnaître les images enregistrées par simple observation, sans aucun matériel. Le procédé trouve également une application dans le domaine des images analogiques traditionnelles (radiographies, images ultrasoniques) qui par l'intermédiare de la numérisation peuvent être stockées sous une forme compatible avec une observation à l'aide de moyens peu coûteux et largement diffusées.

## Revendications

1. Procédé de stockage optique d'une image numérique bi-dimensionnelle constituée de nombres formés chacun de plusieurs chiffres sur un support d'enregistrement (1), chaque chiffre étant traduit par une modification sur un élément de surface du support (1) d'une caractéristique optique dudit support, cette caractéristique pouvant prendre au moins autant de valeurs qu'il existe de chiffres différents dans le système de numération utilisé pour l'image, consistant à décomposer l'image numérique en au moins autant de sous images qu'il est nécessaire d'utiliser de chiffres pour représenter la plus haute valeur possible pour un nombre de l'image numérique, chaque sous image étant conventionnellement associée au rang du chiffre, caractérisé en ce qu'il consiste à agencer séparément les unes à côté des autres lesdites sous images sur ledit support, chaque sous-image étant constituée d'éléments de surface jointifs représentatifs des chiffres d'un rang donné de l'image, lesdits éléments de surface occupant respectivement dans chaque sous image des positions semblables à celles qu'occupent les nombres correspondants qui contiennent ces chiffres dans l'image numérique.

2. Procédé selon la revendication 1, caractérisé par le fait que les chiffres sont des chiffres binaires et que la caractéristique optique du support (1) peut prendre deux valeurs, l'une correspondant au chiffre 0, l'autre au chiffre 1.

3. Procédé selon la revendication 1 ou 2, caractérisé par le fait que le support (1) est constitué par une microfiche.

4. Procédé selon la revendication 1 ou 2, caractérisé par le fait que le support (1) est constitué par un film en bande.

5. Procédé selon la revendication 1 ou 2, caractérisé par le fait que la position d'une sous image sur le support est caractéristique du rang des chiffres qu'elle représente.

6. Procédé selon la revendication 1, caractérisé par le fait qu'un certain nombre de sous images est réservé à des informations supplémentaires telles que signe, code de détection ou de correction d'erreurs.

7. Procédé restitution analogique d'une image numérique bi-dimensionelle stockée selon le procédé de la revendication 1, caractérisé en ce qu'il consiste à éclairer au moins un certain nombre de sous-images (2—5), à effectuer sur les faisceaux lumineux traversant lesdites sous-images une pondération fonction du rang associé à chacune de celles-ci et à faire la somme des faisceaux lumineux pondérés ainsi obtenus de façon à obtenir une superposition optique des différentes sous-images.

8. Procédé selon la revendication 7, caractérisé en ce que ladite somme pondérée est réalisée au moyen de miroirs semi-transparents (Mo—Mn) associés respectivement auxdites sous images et en ce qu'on atténue la contribution globale de tous les éléments de surface d'une sous image donnée correspondant à un rang donné par transmission au travers des miroirs associés aux sous images correspondant aux rangs supérieurs audit rang donné.

## Patentansprüche

1. Verfahren zum optischen Speichern eines digitalen zweidimensionalen Bildes, das aus Zahlen besteht, die jeweils aus mehreren Ziffern auf einem Aufzeichnungträger (1) gebildet sind, wobei jede Ziffer durch eine Änderung einer optischen Eigenschaft des Trägers (1) auf einem Oberflächenelement desselben wiedergegeben wird, wobei diese Eigenschaft wenigstens ebenso viele Werte annehmen kann wie verschiedenen Ziffern in dem für das Bild verwendeten Zahlensystem vorhanden sind, und wobei das Verfahren darin besteht, daß das digitale Bild in wenigstens ebenso viele Unterbilder zerlegt wird, wie Ziffern verwendet werden müssen, um den höchsten möglichen Wert für eine Zahl des digitalen Bildes darzustellen, und wobei jedes Unterbild in herkömmlicher Weise dem Rang der Ziffer zugeordnet ist, dadurch gekennzeichnet, daß es darin besteht, die Unterbilder auf dem Träger getrennt nebeneinander anzuordnen, wobei jedes Unterbild aus aneinander angrenzenden Oberflächenelementen gebildet ist, welche Ziffern eines gegebenen Ranges des Bildes darstellen, und wobei die Oberflächenelemente jeweils in jedem Unterbild Positionen einnehmen, die denjenigen gleichen, welche die entsprechenden Zahlen einnehmen, die diese Ziffern in dem Digitalbild enthalten.

2. Verfahren nach Anspruch 1, dadurch gekennzeichnet, daß die Ziffern Binärziffern sind und daß die optische Eigenschaft des Trägers (1) zwei Werte annehmen kann, von denen der eine der Ziffer O und der andere der Ziffer 1 entspricht.

3. Verfahren nach Anspruch 1 oder 2, dadurch gekennzeichnet, daß der Träger (1) durch eine Mikrofiche gebildet ist.

4. Verfahren nach Anspruch 1 oder 2, dadurch gekennzeichnet, daß der Träger (1) durch einen Filmstreifen gebildet ist.

5. Verfahren nach Anspruch 1 oder 2, dadurch gekennzeichnet, daß die Position eines Unterbildes auf dem Träger kennzeichnend für den Rang der Ziffern ist, die es darstellt.

6. Verfahren nach Anspruch 1, dadurch gekennzeichnet, daß eine bestimmte Anzahl von Unterbildern für zusätzliche Informationen wie Vorzeichen, Detektionscode oder Fehlerkorrektur reserviert ist.

7. Verfahren zur analogen Wiedergabe eines digitalen bidimensionalen Bildes, das durch das Verfahren nach Anspruch 1 gespeichert ist, dadurch gekennzeichnet, daß es darin besteht, wenigstens eine bestimmte Anzahl von Unterbildern (2—5) zu beleuchten, an den Lichtstrahlen, welche die Unterbilder durchqueren, eine Wichtung vorzunehmen, die von dem Rang abhängt, der jedem der Unterbilder zugeordnet ist, und die Summe der so erhaltenen gewichteten Lichtstrahlen zu bilden, so daß eine optische Überlagerung der verschiedenen Unterbilder erhalten wird.

8. Verfahren nach Anspruch 7, dadurch gekennzeichnet, daß die genannte gewichtete Summe mittels halbdurchlässigen Spiegeln (Mo—Mn) gebildet wird, die jeweils den Unterbildern zugeordnet sind, und daß der globale Beitrag aller Oberflächenelemente eines gegeben, einem gegbenen Rang entsprechenden Unterbildes gedämpft wird durch Durchqueren von Spiegeln, die den Unterbildern zugeordnet sind, welche den Rangordnungen entsprechen, die höher sind als der gegebene Rang.

## Claims

1. Method of optically storing a bidimensional digital image composed of numbers each formed of a plurality of digits on a record carrier (1), each digit being reproduced by a modification of an optical characteristic of said carrier (1) on a surface element thereof, said characteristic being susceptible to take at least as many values as different digits exist within the system of numbering used for the image, consisting in decomposing the digital image into at least as many sub-images as digits are to be used for representing the highest possible value of a number of the digital image, each sub-image being conventionally associated with the order of the digit, characterized in that it consists in separately arranging side by side the sub-images on said carrier, each sub-image being composed of surface elements in joining relationship and representing digits of a given order of the image, said surface elements respectively occupying in each sub-image positions which are similar to those occupied by the corresponding numbers containing these digits within the digital image.

2. Method according to claim 1, characterized by the fact that the digits are binary digits and in that the optical characteristic of the carrier (1) is susceptible to take two values, one corresponding to the digit O and the other to the digit 1.

3. Method according to claim 1 or 2, characterized by the fact that the carrier (1) is composed of microfiche.

4. Method according to claim 1 or 2, characterized by the fact that the carrier (1) is composed of a strip-shaped film.

5. Method according to claim 1 or 2, characterized by the fact that the position of a sub-image on the carrier is characteristic of the order of the digits represented thereby.

6. Method according to claim 1, characterized by the fact that a determined number of sub-images is reserved for supplementary information such as sign, detection code or error correction.

7. Method of analog restitution of a bidimensional digital image stored in accordance with the method of claim 1, characterized in that it consists in illuminating at least a determined number of sub-images (2, 5), weighting the light beams crossing said sub-images in dependence on the order associated with each of these and forming the sum of the thus obtained weighted light beams in a manner to obtain an optical superposition of the different sub-images.

8. Method according to claim 7, characterized in that said weighted sum is formed using semi-transparent mirrors (Mo—Mn) respectively associated with said sub-images, and in that the total contribution of all of the surface elements of a determined sub-image corresponding to a determined order is attenuated by transmission through mirrors associated with sub-images corresponding to orders exceeding said determined order.

# FIG_1

# FIG_2

# FIG_3